# EUROPEAN PATENT SPECIFICATION

(11) **EP 2 604 374 B1**
(45) Date of publication and mention of the grant of the patent: **13.12.2017**
(21) Application number: 12182703.4
(22) Date of filing: 03.09.2012
(51) Int. Cl.: B23K 9/20

(54) **JOINING-ELEMENT FEEDING METHOD, JOINING-ELEMENT HOLDING ARRANGEMENT AND JOINING APPARATUS**
ZUFÜHRVERFAHREN FÜR VERBINDUNGSELEMENT, HALTEANORDNUNG FÜR VERBINDUNGSELEMENT UND VERBINDUNGSVORRICHTUNG
PROCÉDÉ D'ALIMENTATION D'ÉLÉMENTS DE JONCTION, AGENCEMENT DE MAINTIEN D'ÉLÉMENTS DE JONCTION ET DISPOSITIF D'ASSEMBLAGE

(30) Priority: 15.12.2011 DE 102011121692
(43) Date of publication of application: 19.06.2013
(73) Proprietor: Newfrey LLC, New Britain, CT 06053 (US)
(72) Inventor: Schneider, Manuel c/o Emhart Teknologies Tucker GmbH, 35394 Giessen (DE); Schneider, Michael c/o Emhart Teknologies Tucker GmbH, 35394 Giessen (DE); Spiess, Manuel c/o Emhart Teknologies Tucker GmbH, 35394 Giessen (DE); Schulz, Udo c/o Emhart Teknologies Tucker GmbH, 35394 Giessen (DE); Becker, Sascha c/o Emhart Teknologies Tucker GmbH, 35394 Giessen (DE); Steinmüller, Florian c/o Emhart Teknologies Tucker GmbH, 35394 Giessen (DE)
(74) Representative: Witte, Weller & Partner Patentanwälte mbB

(56) References cited:
- EP-A1- 1 362 661
- EP-A1- 1 375 045
- EP-A1- 2 070 628
- WO-A1-01/76802
- DE-C1- 4 427 370
- US-A1- 2005 056 620

## Description

The present invention relates to a method for feeding a joining element into a holding arrangement of a joining apparatus, with the following steps: providing a joining element at a delivery device, moving the holding arrangement towards the delivery device, and transferring the joining element in a feeding direction from the delivery device to a holding device of the holding arrangement.

Furthermore, the present invention relates to a holding arrangement for holding a joining element which is to be joined onto a workpiece by means of a joining apparatus, with a housing and a holding device which is arranged on the housing and is designed to hold a joining element, which is fed in a feeding direction.

Furthermore, the present invention relates to a joining apparatus with a joining head which has a holding arrangement for holding a joining element, and a joining drive by means of which the holding arrangement is movable in a joining direction.

Joining apparatuses for joining joining elements onto workpieces are generally known. The joining elements may be irregularly shaped joining elements or rotationally symmetrical joining elements, such as studs. The joining technique for joining the joining element onto the workpiece may be a welding technique, as used, for example, in what is referred to as stud welding. However, it is also known to adhesively bond joining elements onto workpieces, or to thermally weld together joining elements and workpieces consisting of thermoplastic materials.

In joining apparatuses of this type, a joining element is fed to a joining head. This may take place manually. However, in large series applications, for example in the manufacturing of motor vehicle bodies, the joining elements are frequently fed to the joining head in an automated manner. Use is generally made here of blowing air, wherein isolated joining elements are fed to the joining head by compressed air via a feeding tube.

A customary approach consists in providing a holding arrangement with an elastically expandable holding device into which one joining element is fed in each case from behind. In this case, use is frequently made of a loading pin to push the fed-in joining element through the holding device, whereby the latter is elastically expanded, and the joining element is finally held in a defined position in the holding device. The loading pin then initially remains in this position for the joining operation in order thereby to form an axial stop during the joining operation. Holding arrangements and joining apparatuses of this type are known, for example, from EP 1 282 480 B1, DE 10 2008 051 803 A1 or DE 35 30 529 A1.

In an alternative type of joining apparatus, isolated joining elements are provided at a delivery device. In this case, a joining head is then moved towards the delivery device and then the individual joining element is in each case collected, said joining element being inserted into the holding device from the front.

An example of a joining apparatus of this type is known from EP 1 762 326 A2. In this case, a joining head has a holding arrangement which can be displaced by means of a linear motor. The linear motor serves in this case firstly to carry out the actual joining process, but is also used in said known joining apparatus in order to collect a respective joining element from a delivery device. In this connection, the joining head is initially positioned so as to be aligned with the joining element. The holding arrangement is subsequently moved in the direction of the joining element, specifically by means of the linear motor, with two holding jaws being opened. A collecting position is reached as soon as one end of a positioning pin connected to the housing of the holding arrangement strikes against the free end of a shaft of the joining element. The gripper jaws of the holding arrangement are subsequently closed, and the holding arrangement can be moved back again into a starting position, from which a joining process can then be initiated, for example, by the joining head first of all being moved to a joining position.

The advantage of the last-described type of feeding a joining element to a holding arrangement is that the displacement by which the holding arrangement is moved by means of the linear motor can be measured. Accordingly, it is possible to draw a conclusion about the length of a joining element supplied to the delivery device. If, for example, a wrong joining element having the wrong length is supplied, this can be identified before a joining process is carried out, and the wrongly supplied joining element can be ejected at an early point, and therefore the process cycles can be significantly shortened. It is also known from said document to draw a conclusion about the thickness of a shaft of the joining element via the movement of the gripper jaws, and about a surface characteristic, by means of a sensor provided at the delivery device, in order to be able to rule out further error sources.

A disadvantage of this type of joining apparatus is that the linear motor for moving the holding arrangement has to have a relatively large stroke, in particular if the intention is to join joining elements of greatly differing lengths. Accordingly, a joining head of this type is of a relatively large size in the axial direction, and a relatively expensive (long) linear motor has to be supplied.
EP 2 070 628 A1 is directed to a stud welding apparatus comprising a robot and a welding tool. The welding tool is connected to and movable by the robot. The welding tool has a stud gripper and a stud gripper actuator for moving the gripper. The stud gripper actuator is an electrically powered actuator.
WO 01/76802 A1 describes a stud welding method and stud welding device for stud welding without a support foot. According to the method, the stud holder is positioned without a part to be welded at a certain distance from the tool surface. After a part to be welded is provided, the welding axle moves towards the workpiece, wherein the path that needs to be traveled in order to bring the part to be welded and the workpiece into contact is detected. Conclusions regarding the presence or absence of a part to be welded are then drawn based on the previous distance between the stud holder and the workpiece and the path traveled.
US 2005/0056620 A1 relates to a welding system and method for welding elements. The system is equipped with a robot having at least one arm and a welding head, which is mounted on the arm and on which a holding device for holding an element and a lifting device for advancing and returning the holding device are provided.
Document DE 44 27 370 C1 discloses a stud welding apparatus, wherein a carrier plate is mounted on a housing so as to be displaceable along a joining axis. The carrier plate can be moved by means of a pneumatic cylinder, which is coupled to the carrier plate by means of a spring arrangement. A carrier plate plunger, further, extends through a holding arrangement and contacts a stud during a stud welding process. The holding device is adapted to be fed with individual studs from behind. For establishing a final welding position, the pneumatic cylinder is actuated, so that the carrier plate is moved and the plunger thereof displaces the stud into a target position on the holding device.

Against this background, it is an object of the invention to specify an improved method for feeding a joining element into a holding arrangement of a joining apparatus, an improved holding arrangement for holding a joining element, and an improved joining apparatus.

The above object is achieved by a method for feeding a joining element into a holding arrangement of a joining apparatus as defined in claim 1.

Furthermore, the above object is achieved by a holding arrangement for holding a joining element which is to be joined onto a workpiece by means of a joining apparatus, the holding arrangement being defined in claim 8.

Finally, the above object is achieved by a joining apparatus as defined in claim 12.

The joining apparatus may be, for example, a joining apparatus with a joining head which is rotatable on a carrier, as has been disclosed in EP 1 762 326 A2. Reference is therefore made to the full extent to the disclosure of said document so as to supplement the present disclosure. In this type of joining apparatus, one or more delivery devices are arranged on the carrier. As an alternative, however, a delivery device may also be formed in a stationary manner.

The joining apparatus has in particular a joining head which is movable three-dimensionally in space by means of a robot. In this case, the joining head may be fixed directly on an arm of the robot, but may also be fixed on an arm of the robot via a slide which is displaceable in the axial direction. The joining element can be transferred in a feeding direction from the delivery device to the holding device of the holding arrangement in such a manner that the joining element is moved in the direction of the holding device. In a corresponding manner, it is possible for the holding arrangement for feeding the joining element to be moved towards the joining element.

By means of the use of a ram mounted movably on the housing of the holding arrangement, it is possible to draw a conclusion about the length or about another parameter of a fed-in joining element. The ram is a "passive" element which is carried along by the joining element during the feeding operation, and
therefore a separate drive does not need to be provided for measuring a joining element length.

In addition, the joining head of the joining apparatus can be of compact design, in particular in the axial direction. This is because the stroke of a driving motor (linear motor) for moving the holding arrangement with respect to the joining head can be kept relatively small. The stroke of the linear motor is preferably smaller than or equal to a difference between the maximum and the minimum length of different joining elements which are to be joined by means of the joining apparatus. Furthermore, the driving motor can also be used for carrying out a joining process, for example for carrying out a stud welding process. In this connection, a joining element which is held by the holding arrangement is initially positioned in a manner known per se above a joining position. Subsequently, the joining element is placed onto the surface of the workpiece by means of the driving motor. In a further step, a pilot current is switched on, after which the joining element is raised again from the surface of the workpiece thus drawing an electric arc. The electric arc current is then increased. The electric arc melts those surfaces of the joining element and of the workpiece which are opposite each other. Finally, the joining element is lowered again onto the surface of the workpiece by means of the driving motor, preferably below a zero position such that the melts mix. With the renewed contact between joining element and workpiece, the welding current is short-circuited and switched off, and therefore the entire melt solidifies. The joining element can subsequently be released from the holding arrangement, and the holding arrangement can be moved back in relation to the joining element by means of the driving motor in order, subsequently, to retrieve a new joining element from the delivery device. The object is therefore fully achieved.

In general, a configuration of a holding arrangement with a ram which is mounted movably thereon in a feeding direction is also conceivable for the situation in which a measuring device for measuring the ram displacement is not, which configuration however does not fall under the scope of the claimed invention. Even in this case, the joining head can be of overall more compact design, since a driving motor having a smaller stroke can be used.

However, it is particularly preferred, as mentioned, if the detected ram displacement is not only measured but is also used for checking at least one parameter of the joining element, in particular for checking a length of the joining element in a direction parallel to the feeding direction.

The joining element is preferably a rotationally symmetrical joining element, in particular a stud. In the method, the joining element is, as a rule, fed with a shaft in front into the holding device, the joining element, as a rule, having a joining flange, on the lower side of which a joining surface is formed.

By checking the length of the joining element, it is possible to identify early on whether the supplied joining element is suitable for the subsequently planned joining process, in particular has the correct length. If this is not the case, the collecting process can be prematurely broken off in order to eject the provided joining element and subsequently to provide a correct joining element for the subsequent joining process.

In this process, it is not only possible to detect the joining element length. If the holding device, for example, has a gripper, as described in EP 1 762 326 A2, it is also possible at this time to detect the diameter of the provided stud in order to interrogate this parameter early on and to eject a possibly wrongly provided joining element early on so as to avoid wrong joining elements being fitted onto a workpiece.

In the method according to the invention, the holding device is initially open during the transfer of the joining element and is closed after the transfer step.

By the size of said closing movement, it is possible to draw a conclusion about the diameter or another dimension in the transverse direction of a fed-in joining element.

Furthermore, it is advantageous, in the method according to the invention, if the ram is prestressed counter to the feeding direction into a starting position and is carried along counter to the prestress during the transfer of the joining element.

Accordingly, the ram generally has a defined starting position with respect to the holding device, and therefore the ram displacement can be precisely detected from said starting position as far as an end position in the transfer step.

Furthermore, it is of particular advantage if the ram is fixed, in particular is fixed in a clamping manner, with respect to a housing of the holding arrangement after the transfer step. This can take place in the holding arrangement according to the invention, for example, by a fixing device which is mounted on the housing and is designed in particular as a clamping device, preferably as a pneumatically actuable clamping device.

In general, it is possible for a joining element to be held solely by the holding device of the holding arrangement. Since axial forces may act on the joining element during the joining process, the gripper force then has to be relatively high.

By means of the measure of fixing the ram in a clamping manner after the transfer step, said ram acts as a stop or abutment for the joining element, and therefore the holding device in the axial direction only has to absorb forces as may occur in a direction counter to the feeding direction (for example inertial forces, as may occur during rapid movement of the joining head).

In this case, it is of particular advantage if the fixing step takes place synchronously with a closing step of the holding device, in particular by actuation of a single valve.

In a corresponding manner, it is preferred, in the holding arrangement according to the invention, if the holding device is assigned an actuator arrangement which is designed to actuate the holding device and/or a fixing device for fixing the ram.

In other words, the step of fixing the joining element can take place simultaneously with the closing of the holding device (for example closing of grippers). If this takes place pneumatically, this can take place by means of an individual pneumatic valve. Accordingly, the fixing of the ram and therefore the axial fixing of the joining element in the feeding direction can be realized without a relatively large outlay. For example, an additional connection for actuating the clamping device merely has to be provided on a valve which is already present for closing the holding device.

In the method according to the invention, it is advantageous if the transfer step includes a relative movement of the holding arrangement relative to the delivery device in a direction parallel to the feeding direction, as described above, wherein the relative movement is limited by a stop.

A stop of this type may be, for example, a stop on the holding arrangement, but is preferably a stop between the joining head of the joining apparatus and the delivery device. In this case, the stop means used can be, in particular, a supporting foot which can be used per se for other purposes (for example determining the zero position) in the joining process.

The effect which can be achieved by this type of stop is that a joining surface of the fed-in joining element always has a defined relative position to the joining head, and therefore subsequent joining processes can be carried out more easily.

In addition, it is possible to hold a joining element, for example, as far as possible adjacent to a flange section such that the joining element can be held in a stable and exact position during the joining process.

With the present invention, one or more of the following advantages is obtained, depending on the embodiment.

The ram of the holding arrangement according to the invention constitutes a type of displaceable stop which can be used for joining heads of joining apparatuses having front loading. With the measuring device integrated in the holding device, it is possible to detect the length of a fed-in joining element, wherein the measuring device is assigned to the ram.

If the joining element is held by means of a holding device in the form of gripping jaws, which holding device is likewise equipped with a displacement measuring system, a conclusion can be drawn about the correct joining element from the combination of the measured values of joining element length and joining element diameter. In this case, the joining element is in particular a rotationally symmetrical stud.

In particular, it is possible to detect the joining element length before a joining process is initiated. Should, therefore, a wrong joining element have been provided at the delivery device, the early identification can avoid an unnecessary loss of cycle time.

The displaceable ram, the front side of which preferably bears against an end side of the stud element, functions "passively". In other words, the holding arrangement according to the invention for determining the joining element length does not require an active drive, which would have to be set (for example by a motor) to the expected joining element. The displaceable ram makes it possible to keep the joining head to a very small size. In contrast to joining heads which do not have a displaceable ram of this type, a driving motor for linearly displacing the holding arrangement can be designed with a smaller stroke.

The displaceable ram makes it possible to hold the joining element forwards as far as possible, i.e. as tight as possible against a flange, and therefore the joining element achieves a stable and precise position during the joining process.

The joining apparatus preferably has a supporting foot with which the workpiece can be prestressed during the joining operation. Furthermore, the penetration depth of the joining element into the workpiece, in particular during welding processes, can be determined via the supporting foot. Length differences of the joinable joining elements of up to 40 mm, in particular of up to 35 mm, are preferably possible.

In particular, whenever a feeding device for supplying joining elements to a delivery device operates with a switch system, in which different joining elements are fed through a tube, there is basically the risk of a wrong joining element being provided. In this case, the invention makes it possible to identify early on that a wrong joining element has been supplied, and not only after the joining process has been initiated.

The fixing device is preferably designed as a clamping device and is preferably capable of absorbing axial forces on the ram of at least 50 N, in particular 100 N and/or of at maximum 250 N, in particular at maximum 200 N.

After the joining process and after the opening of the gripping device, it is possible for the position of the ram to be interrogated again even before the backwards movement of the holding arrangement. This makes it possible to check whether the ram has "slipped" during the joining process.

After opening of the fixing device, the ram is, according to the invention, moved back again into a starting position by means of a compression spring.

It goes without saying that the scope of the invention is defined by the claims.

Exemplary embodiments of the invention are illustrated in the drawing and are explained in more detail in the description below. In the drawing:
- Fig. 1: shows a schematic illustration of a joining apparatus according to the invention with a holding arrangement according to the invention;
- Fig. 2: shows the holding arrangement of Fig. 1 before the feeding of a joining element;
- Fig. 3: shows a view comparable to Fig. 2 after the feeding of the joining element and before the closing of the holding device and before the actuation of a clamping device;
- Fig. 4: shows an illustration similar to Figs. 2 and 3 after the closing of the holding device and after the closing of the clamping device and before the holding arrangement is pulled back;
- Fig. 5: shows a longitudinal sectional view through a further embodiment of a holding arrangement according to the invention; and
- Fig. 6: shows a perspective view of a joining apparatus with a rotatable joining head.

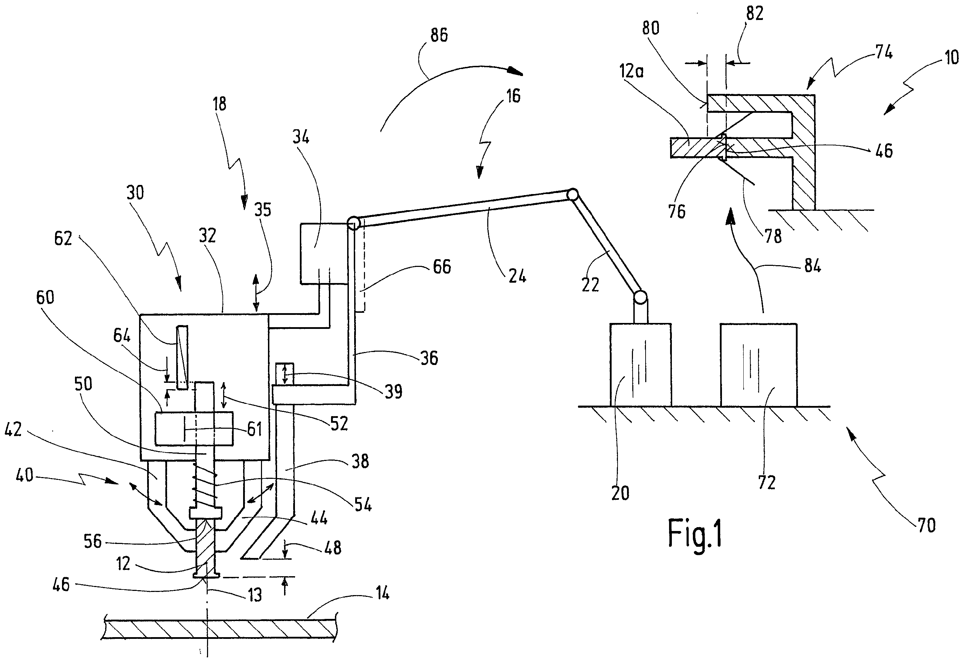

In Fig. 1, a joining arrangement is illustrated schematically and is denoted in general by 10. The joining arrangement 10 serves for the automated carrying out of joining operations, in particular stud welding processes or thermoplastic welding processes. In more precise terms, the joining arrangement 10 serves to join joining elements, in particular rotationally symmetrical joining elements, such as studs 12, onto a surface of a workpiece 14, specifically along a joining axis 13 which preferably runs perpendicularly to the surface of the workpiece 14. The joining elements 12 and the workpieces 14 may be made, for example, of metal when the joining process is a stud welding process. However, the joining elements 12 and the workpieces 14 may also be produced from a thermoplastic in order to carry out thermowelding processes.

The joining arrangement 10 has a joining apparatus 16 with a joining head 18 which is guided by a robot 20. The robot 20 has, for example, a first arm 22 and a second arm 24, wherein the joining head 18 is mounted at the end of the second arm 24 and is movable three-dimensionally in space by means of the robot 20. By this means, a multiplicity of joining processes can be carried out successively at different points of one or more workpieces, for example in the manufacturing of vehicle bodies.

The joining head 18 has a holding arrangement 30 with a housing 32. The holding arrangement 30 with the housing 32 is movable along the joining axis 13 by means of a linear motor 34, wherein the linear motor 34 is fixed onto a head frame 36 of the joining head 18. The joining movement is indicated schematically at 35.

A supporting foot 38 is furthermore fixed to the head frame 36, the supporting foot extending from the head frame 36 in the joining direction towards the workpiece 14. The supporting foot 38 can also be displaceable on the head frame 36 between two axial positions, as indicated at 39.

The holding arrangement 30 furthermore includes a holding device 40 which, in the present case, is designed as a gripping device with a first gripper 42 and a second gripper 44.

The joining element 12 has a cylindrical shaft on which the grippers 42, 44 can act, and a flange (not denoted specifically), on the underside of which a joining surface 46 is formed. If the joining element 12 is held by the holding device 40, said joining element protrudes by an excess length 48 in relation to the supporting foot 38.

Furthermore, a ram 50 is mounted displaceably on the holding arrangement 30, specifically in a ram movement direction 52 which is oriented parallel to the joining movement direction 35. According to the invention, the ram 50 is prestressed in relation to the housing 32 in a direction towards the joining element 12, specifically by means of a spring device 54. The ram 50 has a joining-element stop surface 56 which bears against an end side of the joining element 12, which end side is opposite the joining surface 46.

The holding arrangement 30 furthermore includes a fixing device (indicated schematically in Fig. 1) in the form of a clamping device 60. The position of the ram 50 relative to the housing 32 can be fixed via the clamping device 60. In Fig. 1, the closed state of the clamping device 60 is indicated schematically at 61.

Furthermore, the holding arrangement 30 has a ram-displacement measuring device 62 which is designed to detect the ram displacement 64 or a ram position.

The joining head 18 may be fixed substantially rigidly to the robot arm 24, but may also be fixed on a slide 66 which is mounted on the second arm 24 of the robot 20 so as to be displaceable in a direction parallel to the joining axis 13.

The joining arrangement 10 furthermore includes a joining-element supplying arrangement 70. The joining-element supplying arrangement 70 has one or more reservoirs 72 of joining elements. Furthermore, the joining-element supplying arrangement 70 includes a delivery device 74 which, in the present case, is arranged in a stationary manner. As an alternative, the delivery device 74 may also be fixed to the joining head 18. A joining element 12 to be collected by the joining head 18 is held in the delivery device 74, specifically in such a manner that the joining surface 46 of the provided joining element 12a bears against a delivery stop 76 of the delivery device 74. Furthermore, the provided joining element 12a is held in this position by means of an elastic fixing means 78 (indicated schematically). The delivery device 74 includes a supporting foot stop 80 which protrudes in relation to the delivery stop 76 by an excess length 82 which is identical to the excess length 48.

Fig. 1 furthermore schematically indicates feeding means 84 by means of which joining elements can be transported from the reservoir 72 to the delivery device 74, for example via a tube and by means of compressed air.

For the situation in which the joining apparatus 16 is designed as a stud welding apparatus, said joining apparatus is operated as follows:

The description below is based on a joining element 12 being collected from the delivery device 74 and being held by means of the holding device 40, as illustrated in Fig. 1 at 12. The joining head is moved by means of the robot 20 into a position above a welding position of a workpiece 14, as illustrated in Fig. 1. Subsequently, the head frame 36 is first of all moved towards the workpiece 14 (for example by means of the slide 66) until the supporting foot 38 bears on the surface of the workpiece 14. In the process, the holding arrangement 30 is moved relative to the head frame, and therefore the joining surface 46 touches the workpiece 14. An electric pilot current is subsequently switched on, the pilot current flowing between the workpiece 14 and the joining element 12. The holding arrangement 30 is subsequently moved by means of the linear motor 34 in such a manner that the joining element 12 is raised from the surface of the workpiece 14, whereupon an electric arc is stretched. The electric current is then increased to a welding current such that the surfaces bearing against each other (joining surface 46 and corresponding surface on the surface of the workpiece 14) are melted. The holding arrangement 30 is subsequently driven again by means of the linear motor 34 in such a manner that the joining element 12 is lowered onto the workpiece 14. The joining element penetrates here into the workpiece 14. The penetration depth of the joining element 12 into the workpiece 14 can then be adjusted precisely by means of the linear motor 34. The excess length 48 is illustrated in exaggerated form in Fig. 1 for a clearer illustration.

With the contact between joining element 12 and workpiece 14, the electric arc is short-circuited and the welding current is switched off. The melts solidify. The supporting foot 38 here preferably prestresses the workpiece 14 such that the latter has a stable position relative to the joining head and the holding arrangement 30, and consequently vibrations or the like cannot impair the solidification of the overall melt. With the solidification of the overall melt, the joining element 12 is integrally bonded to the workpiece 14. The holding device 40 subsequently opens, and the holding arrangement 30 is moved back again from the joined joining element 12 by means of the linear motor 34. The slide 66 may optionally also be actuated subsequently, if this is necessary. The joining head 18 is subsequently guided in a movement (shown schematically in Fig. 1 at 86) to the delivery device 74 where the holding arrangement 30, with the holding device 40 open, is moved towards the supplied joining element 12a. In this case, the clamping device 60 is also opened beforehand, and therefore the ram 50 is prestressed by means of the spring device 54 into a starting position in which the ram displacement 64 is zero.

The holding arrangement 30 is subsequently moved by means of the linear motor 34 towards the provided joining element 12a, wherein, in the course of said movement, the joining-element stop surface 56 strikes against the end side of the supplied stud 12a. This may take place earlier or later depending on the length of the supplied joining element. The holding arrangement 30 is subsequently moved further by means of the linear motor until a position is reached, in which the holding device 40 can grasp the supplied joining element 12a in the vicinity of the flange by closing of the grippers 42, 44. This position is predefined by the supporting foot 38 striking against the supporting foot stop 80. The effect achieved by this is that the holding device 40 always grasps the joining element in a fixed axial position relative to the joining surface 46 irrespective of the length of the supplied joining element 12a.

With the closing of the gripping device, the clamping device 60 is also closed, thus fixing the position of the ram 50 relative to the housing 32 of the holding arrangement 30. The linear motor 34 is subsequently driven again in such a manner that the holding arrangement 30 is moved back, the supplied joining element 12a being carried along, specifically by being pulled out of the elastic fixing means 78.

With the joining element 12a collected in such a manner, a further joining process, as has already been described above, can then be carried out.

During the collecting of the joining element 12a, the ram displacement 64 is detected, as a result of which a conclusion can be drawn about the length of the supplied joining element 12a. If a wrong joining element has been supplied, said joining element can be rejected, i.e. is not collected by the holding device 40 at all, but rather is separated out. Subsequently, a correct joining element is supplied by a suitable control system, and therefore the collecting process is repeated.

With the closing of the clamping device 60, the position of the joining element 12 in the holding arrangement 30 is fixed, specifically in the feeding direction 107. By this means, the subsequent joining process can be carried out without there being the risk of the joining element 12 "slipping" in the holding device 40 when axial forces occur (for example during lowering of the joining element 12 onto the workpiece 14). In this case, the ram 50 forms an axial stop for the joining element 12. After the joining process, the ram displacement 64 can also be detected once again and compared with the originally detected ram displacement. If said ram displacements differ from each other, it is possible to conclude that the joining element 12 has slipped during the joining process, and therefore the joining connection produced subsequently has to be checked once again.

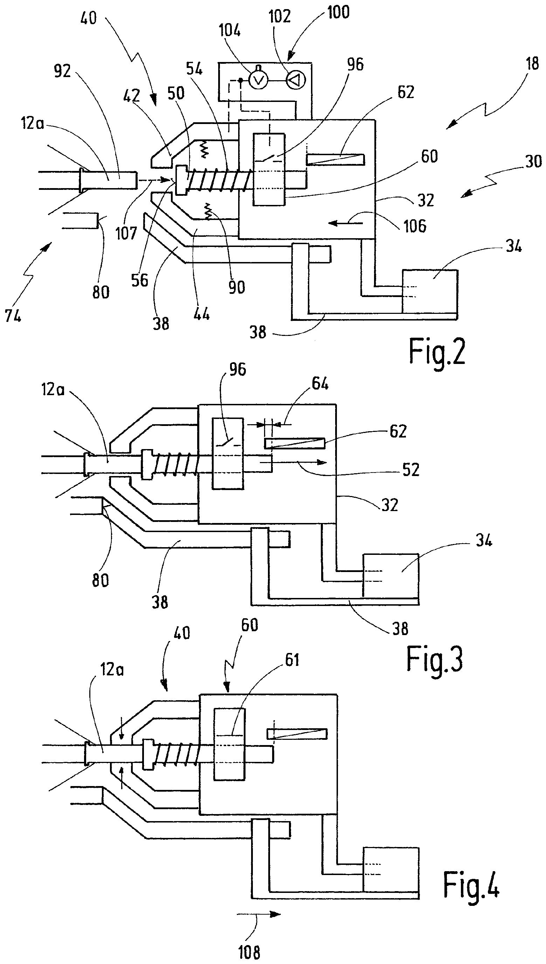

The process of collecting a joining element in the delivery device 74 is illustrated once again in detail in Figures 2 to 4.

Fig. 2 shows the joining head with the holding arrangement 30 and shows a state, in which the joining head has been moved towards the delivery device 74 in such a manner that an axis of the ram 50 coincides with the axis of a supplied joining element 12a. Fig. 2 furthermore shows that an actuator arrangement 100 is provided for actuating the holding device 40 and the clamping device 60. In one embodiment, the actuator arrangement 100 can actuate the holding device 40 and the clamping device 60 independently of each other such that correct delivery can take place by means of a suitable sequence control system. The actuator arrangement here may be in the form of an electric motor or electromagnet. In the present case, the actuator arrangement 100 is a pneumatic actuator arrangement 100 with a pressure source 102 and at least one valve 104. An input of the valve 104 is connected to the pressure source 102. An output of the valve 104 is connected both to the holding device 40 and to the clamping device 60 in such a manner that said devices are actuated synchronously, in particular simultaneously, in each case.

In a basic position with the clamping device 60 open and holding device 40 open, the ram 50 is prestressed towards the supplied joining element 12a, and the grippers 42, 44 are likewise prestressed into an opening position, for example by means of gripper springs 90. By means of a receiving movement 106 of the holding arrangement 30 by means of the linear motor 34, the holding arrangement 30 is fed onto the provided joining element 12a such that the latter is introduced into the holding device 40 in a feeding direction 107 which is opposed to the receiving movement 106. In the process, a shaft 92 of the supplied joining element 12a passes between the open grippers 42, 44 and finally strikes against the joining-element stop surface 56 of the ram 50. Upon continuation of the receiving movement 106, the joining element 12a is introduced further in the feeding direction 107 into the holding device 40 until the supporting foot 38 strikes against the supporting foot stop 80, which is shown in Fig. 3. Up until there, the ram 50 has executed a ram displacement 64 with respect to the housing 32 of the holding arrangement 30, said ram displacement being a measure of the length of the joining element 12a or of the shaft 92.

Owing to the fact that the clamping device 60 had been opened, only the force of the spring device 54 has had to be overcome in order to move the ram 50.

After the stop position is reached in Fig. 3, the ram displacement 64 is detected and compared with a desired value, which corresponds to a desired length of the joining element 12a. If the ram displacement 64 indicates that a wrong joining element 12a has been supplied, the operation is broken off and the supplied joining element 12a is discarded. If the ram displacement 64 shows that the length of the joining element 12a is correct, the holding device 40, as shown in Fig. 4, is closed, and, synchronously with respect thereto, the clamping device 60 is brought out of the open position 96, illustrated in Figs. 2 and 3, into the closed position 61, in which the ram 50 is firmly clamped with respect to the housing 32 of the holding arrangement 30, specifically preferably pneumatically.

The holding arrangement 30 is subsequently moved back again counter to the receiving movement 106 by means of the linear motor 34, as indicated at 108 in Fig. 4.

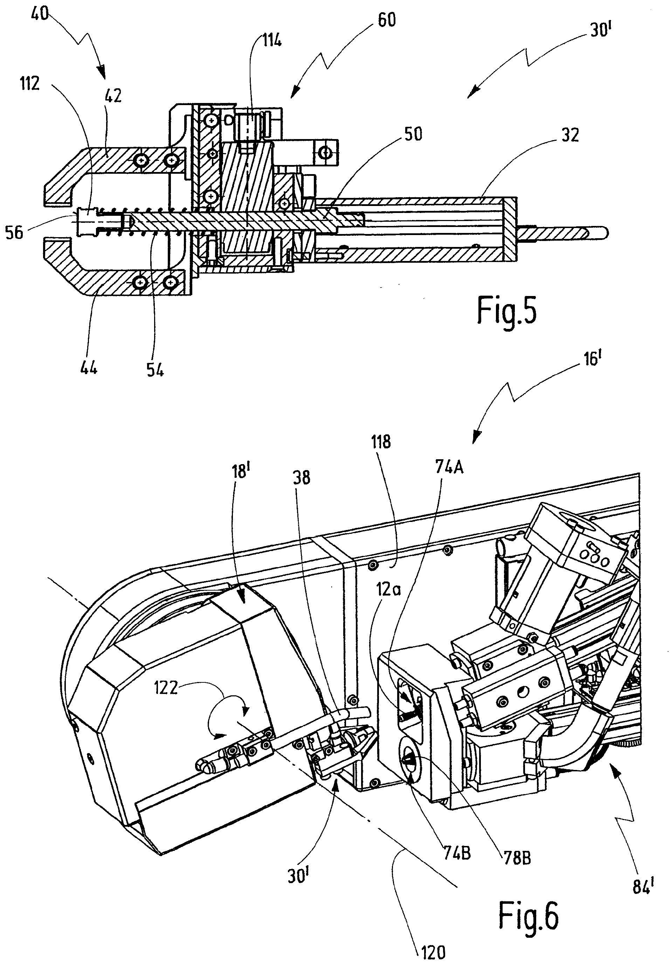

Fig. 5 shows a further embodiment of a holding arrangement 30', which generally corresponds in construction and operation to the holding arrangement 30 of Figures 1 to 4. Identical elements are therefore identified by the same reference numbers. Essentially the differences are explained below.

In the holding arrangement 30', the front side of the ram 50 has an interchangeable stop element 112, on the front side of which the joining-element stop surface 56 is formed. By this means, the installation of the spring device 54 can be simplified. In addition, the stop element 112 can be interchanged in the event of wear.

Furthermore, Fig. 5 shows that the clamping device 60 is oriented transversely with respect to the joining axis and has a housing through which the ram 50 is guided. In this case, the clamping device 60 has a compressed air connection 114, and furthermore includes means (not shown specifically) for the pneumatic clamping of the ram 50 if a predetermined pressure is applied at the compressed air connection 114. A rear end of the ram 50 is guided in a cylindrical section of the housing 32 and has a shoulder section by means of which the starting position of the ram is limited. Furthermore, in this section of the housing 32, a measuring device (not shown specifically) for measuring the ram displacement is shown, which measuring device may comprise, for example, a sliding contact in the manner of a potentiometer, a Hall sensor or the like.

Fig. 6 shows a further embodiment of a joining apparatus 16' which generally corresponds in respect of construction and operation to the joining apparatus 16 of Fig. 1. Identical elements are therefore identified by the same reference numbers. Essentially the differences are explained below.

The joining apparatus 16' has an elongate carrier 118, the end of which (not illustrated) can be fixed to the arm 24 of a robot 20. A joining head 18' is mounted rotatably about an axis of rotation 120 at the front end (illustrated) of the carrier 118. The rotational movement of the joining head 18 is indicated at 122. Furthermore, a first delivery device 74A and a second delivery device 74B, which are arranged offset on a circular path about the axis of rotation 120, are arranged on the carrier 118. Fig. 6 furthermore illustrates the elastic fixing means 78B of the second delivery device 74B.

In this case, the feeding means 84' are designed in such a manner that joining elements can be transported from reservoirs and optionally via switches to the delivery devices 74A, 74B which are moved together with the carrier 118.

In Fig. 6, the joining head 18' is oriented with the first delivery device 74A, at which a joining element 12a is provided. Consequently, the joining head 18' has been moved by a rotational movement 122 towards the delivery device 74A, whereupon the holding arrangement 30' is subsequently moved towards the joining element 12a by means of a linear motor (not illustrated specifically), as illustrated in Figures 2 to 4. The joining head 18' is subsequently rotated again in order to carry out a joining process. Details of a joining apparatus 16' of this type are described in EP 1 762 326 A2 mentioned at the beginning.

## Claims

1. Method for feeding a joining element (12) into a holding arrangement (30) of a joining apparatus (16), with the following steps:
- providing the joining element (12) at a delivery device (74);
- moving (86; 122) the holding arrangement (30) towards the delivery device (74);
- transferring the joining element (12) in a feeding direction (107) from the delivery device (74) to a holding device (40) of the holding arrangement (30), wherein, during the transfer into the holding device (40), the joining element (12) carries along a ram (50), which is mounted movably on the holding arrangement (30) in the feeding direction (107), wherein the ram (50) is a passive element which is carried along by the joining element (12) during the feeding operation; and
- measuring the ram displacement (64) by which the ram (50) has been carried along.

2. Method according to Claim 1, wherein the detected ram displacement (64) is used for checking at least one parameter of the joining element (12), in particular for checking a length of the joining element (12) in a direction parallel to the feeding direction (107).

3. Method according to Claim 1 or 2, wherein the holding device (40) is initially open during the transfer of the joining element (12) and is closed after the transfer step.

4. Method according to one of Claims 1-3, wherein the ram (50) is prestressed counter to the feeding direction (107) into a starting position and is carried along counter to the prestress during the transfer of the joining element (12).

5. Method according to one of Claims 1-4, wherein the ram (50) is fixed, in particular is fixed in a clamping manner, with respect to a housing of the holding arrangement (30) after the transfer step.

6. Method according to Claim 5, wherein the fixing step takes place synchronously with a closing step of the holding device (40), in particular by actuation of a single valve (104).

7. Method according to one of Claims 1-6, wherein the transfer step includes a relative movement of the holding arrangement (30) relative to the delivery device (74) in a direction parallel to the feeding direction (107), wherein the relative movement is limited by a stop (80).

8. Holding arrangement (30) for holding a joining element (12) which is to be joined onto a workpiece (14) by means of a joining apparatus (16), with
- a housing (32),
- a holding device (40) which is arranged on the housing (32) and is designed to hold the joining element (12), which is fed in a feeding direction (107),
- a measuring device (62) which is arranged on the housing (32) and is configured to detect at least one parameter of the joining element (12) fed into the holding device (40),
wherein a ram (50) is mounted displaceably on the housing (32) of the holding arrangement (30), **characterised in that** the ram (50) is prestressed elastically in a direction counter to the feed direction (107), said ram (50) being a passive element which is configured to be carried along by the joining element (12) during the feeding of the joining element (12) into the holding device (40), wherein the measuring device (62) measures the ram displacement (64).

9. Holding arrangement according to Claim 8, **characterized in that** a fixing device (60) by means of which the ram (50) can be fixed is mounted on the housing (32).

10. Holding arrangement according to Claim 9, **characterized in that** the fixing device (60) is designed as a clamping device, in particular as a pneumatically actuable clamping device.

11. Holding arrangement according to one of Claims 8-10, **characterized in that** the holding arrangement (30) is assigned an actuator arrangement (100) which is designed to actuate the holding device (40) and/or a fixing device (60) for fixing the ram (50).

12. Joining apparatus (16) with a joining head (18) which has a holding arrangement (30) for holding a joining element (12), and a joining drive (34) by means of which the holding arrangement (30) is movable in a joining direction, **characterized in that** the holding arrangement (30) is a holding arrangement according to one of Claims 8-11

13. Joining apparatus according to Claim 12, **characterized in that** the joining head (18) has a supporting foot (38) for bearing against a workpiece (14) onto which the joining element (12) is to be joined.

## Patentansprüche

1. Verfahren zum Zuführen eines Fügeelementes (12) in eine Halteanordnung (30) einer Fügevorrichtung (16), mit den Schritten:
- Bereitstellen eines Fügeelementes (12) an einer Übergabeeinrichtung (74);
- Bewegen (86; 122) der Halteanordnung (30) hin zu der Übergabeeinrichtung (74);
- Überführen des Fügeelementes (12) in einer Zuführrichtung (107) von der Übergabeeinrichtung (74) zu einer Halteeinrichtung (40) der Hafteanordnung (30), wobei das Fügeelement (12) beim Überführen in die Halteeinrichtung (40) einen Stößel (50) mitnimmt, der an der Halteeinrichtung (30) in Zuführrichtung (107) beweglich gelagert ist, wobei der Stößel (50) ein passives Element ist, das bei dem Zuführvorgang von dem Fügeelement (12) mitgenommen wird;
- Messen des Stößelweges (64), um den der Stößel (42, 50) mitgenommen worden ist.

2. Verfahren nach Anspruch 1, wobei der erfasste Stößelweg (64) zur Überprüfung wenigstens eines Parameters des Fügeelementes (12) verwendet wird, insbesondere zur Überprüfung einer Länge des Fügeelementes (12) in Richtung parallel zur Zuführrichtung (107).

3. Verfahren nach Anspruch 1 oder 2, wobei die Halteeinrichtung (40) bei dem Überführen des Fügeelementes (12) zunächst geöffnet ist und nach dem Überführungsschritt geschlossen wird.

4. Verfahren nach einem der Ansprüche 1 - 3, wobei der Stößel (42, 50) entgegen der Zuführrichtung (107) in eine Ausgangsposition vorgespannt ist und bei dem Überführen des Fügeelementes (12) gegen die Vorspannung mitgenommen wird.

5. Verfahren nach einem der Ansprüche 1 - 4, wobei der Stößel (42, 50) nach dem Überführungsschritt in Bezug auf ein Gehäuse der Halteanordnung (30) fixiert, insbesondere klemmend fixiert wird.

6. Verfahren nach Anspruch 5, wobei der Fixierungsschritt synchron mit einem Schließschritt der Halteeinrichtung (40) erfolgt, insbesondere durch Betätigen eines einzelnen Ventils (104).

7. Verfahren nach einem der Ansprüche 1 - 6, wobei der Überführungsschritt eine Relativbewegung der Halteanordnung (30) relativ zu der Übergabeeinrichtung (74) in Richtung parallel zu der Zuführrichtung (107) beinhaltet, wobei die Relativbewegung durch einen Anschlag (80) begrenzt wird.

8. Halteanordnung (30) zum Halten eines Fügeelementes (12), das mittels einer Fügevorrichtung (16) auf ein Werkstück (14) zu fügen ist, mit
- einem Gehäuse (32),
- einer Halteeinrichtung (40), die an dem Gehäuse (32) angeordnet und dazu ausgebildet ist, das Fügeelement (12) zu halten, das in einer Zuführrichtung (107) zugeführt wird,
- einer Messeinrichtung (62), die an dem Gehäuse (32) angeordnet und dazu ausgelegt ist, wenigstens einen Parameter eines in die Halteeinrichtung (40) zugeführten Fügeelementes (12) zu erfassen,
wobei an dem Gehäuse (32) der Halteanordnung (30) ein Stößel (50) verschieblich gelagert ist,
**dadurch gekennzeichnet, dass**
der Stößel (50) entgegen der Zuführrichtung (107) elastisch vorgespannt ist, wobei der Stößel (50) ein passives Element ist, das dazu ausgebildet ist, bei dem Zuführen eines Fügeelementes (12) in die Halteeinrichtung (40) mitgenommen zu werden, wobei die Messeinrichtung (62) den Stößelweg (64) misst.

9. Halteanordnung nach Anspruch 8, **dadurch gekennzeichnet, dass** an dem Gehäuse (32) eine Fixierungseinrichtung (60) gelagert ist, mittels der der Stößel (50) fixierbar ist.

10. Halteanordnung nach Anspruch 9, **dadurch gekennzeichnet, dass** die Fixierungseinrichtung (60) als Klemmeinrichtung ausgebildet ist, insbesondere als pneumatisch betätigbare Klemmeinrichtung.

11. Halteanordnung nach einem der Ansprüche 8 - 10, **dadurch gekennzeichnet, dass** der Halteanordnung (30) eine Aktuatoranordnung (100) zugeordnet ist, die dazu ausgebildet ist, die Halteeinrichtung (40) und/oder eine Fixierungseinrichtung (60) zum Fixieren des Stößels (50) zu betätigen.

12. Fügevorrichtung (16) mit einem Fügekopf (18), der eine Halteanordnung (30) zum Halten eines Fügeelementes (12) sowie einen Fügeantrieb (34) aufweist, mittels dessen die Halteanordnung (30) in einer Fügerichtung beweglich ist, **dadurch gekennzeichnet, dass** die Halteanordnung (30) eine Halteanordnung nach einem der Ansprüche 8 - 11 ist.

13. Fügevorrichtung nach Anspruch 12, **dadurch gekennzeichnet, dass** der Fügekopf (18) einen Stützfuß (38) zur Anlage an einem Werkstück (14) aufweist, auf das das Fügeelement (12) zu fügen ist.

## Revendications

1. Procédé d'introduction d'un élément de raccordement (12) dans un système de maintien (30) d'un appareil de raccordement (16), comportant les étapes suivantes :
- placer l'élément de raccordement (12) au niveau d'un dispositif de distribution (74) ;
- déplacer (86 ; 122) le système de maintien (30) en direction du dispositif de distribution (74) ;
- transférer l'élément de raccordement (12) dans une direction d'introduction (107) à partir du dispositif de distribution (74) jusqu'à un dispositif de maintien (40) du système de maintien (30), l'élément de raccordement (12) entraînant, au cours du transfert dans le dispositif de maintien (40), un coulisseau (50), qui est installé de manière mobile sur le système de maintien (30), dans la direction d'introduction (107), le coulisseau (50) étant un élément passif entraîné par l'élément de raccordement (12) au cours de l'opération d'introduction ; et
- mesurer le déplacement du coulisseau (64) correspondant à la distance sur laquelle le coulisseau (50) a été entraîné.

2. Procédé selon la revendication 1, dans lequel le déplacement du coulisseau (64) détecté est utilisé pour contrôler au moins un paramètre de l'élément de raccordement (12), en particulier pour contrôler une longueur de l'élément de raccordement (12) dans une direction parallèle à la direction d'introduction (107).

3. Procédé selon la revendication 1 ou 2, dans lequel le dispositif de maintien (40) est initialement ouvert au cours du transfert de l'élément de raccordement (12) et est fermé après l'étape de transfert.

4. Procédé selon l'une des revendications 1 à 3, dans lequel le coulisseau (50) est pré-sollicité à l'encontre de la direction d'introduction (107) dans une position initiale et est entraîné à l'encontre de la pré-sollicitation au cours du transfert de l'élément de raccordement (12).

5. Procédé selon l'une des revendications 1 à 4, dans lequel le coulisseau (50) est fixé, en particulier est fixé par serrage, par rapport à un logement du système de maintien (30) après l'étape de transfert.

6. Procédé selon la revendication 5, dans lequel l'étape de fixation a lieu de manière synchronisée par rapport à une étape de fermeture du dispositif de maintien (40), en particulier par actionnement d'une seule valve (104).

7. Procédé selon l'une des revendications 1 à 6, dans lequel l'étape de transfert comprend un mouvement relatif du système de maintien (30) par rapport au dispositif de distribution (74) dans une direction parallèle à la direction d'introduction (107), dans lequel le mouvement relatif est limité par une butée (80).

8. Système de maintien (30) servant au maintien d'un élément de raccordement (12) qui est destiné à être raccordé sur une pièce (14) au moyen d'un appareil de raccordement (16), comportant
- un logement (32),
- un dispositif de maintien (40) qui est disposé sur le logement (32) et est conçu pour maintenir l'élément de raccordement (12) qui est introduit dans une direction d'introduction (107),
- un dispositif de mesure (62) qui est disposé sur le logement (32) et est configuré pour détecter au moins un paramètre de l'élément de raccordement (12) introduit dans le dispositif de maintien (40),
un coulisseau (50) étant installé de manière déplaçable sur le logement (32) du système de maintien (30), **caractérisé en ce que**
le coulisseau (50) est pré-sollicité élastiquement dans une direction opposée à la direction d'introduction (107), ledit coulisseau (50) étant un élément passif qui est configuré pour être entraîné par l'élément de raccordement (12) au cours de l'introduction de l'élément de raccordement (12) dans le dispositif de maintien (40), le dispositif de mesure (62) mesurant le déplacement du coulisseau (64).

9. Système de maintien selon la revendication 8, **caractérisé en ce qu'**un dispositif de fixation (60), au moyen duquel le coulisseau (50) peut être fixé, est installé sur le logement (32).

10. Système de maintien selon la revendication 9, **caractérisé en ce que** le dispositif de fixation (60) est conçu sous la forme d'un dispositif de serrage, en particulier sous la forme d'un dispositif de serrage pouvant être actionné par voie pneumatique.

11. Système de maintien selon l'une des revendications 8 à 10, **caractérisé en ce que** le système de maintien (30) est doté d'un système d'actionnement (100) qui est conçu pour actionner le dispositif de maintien (40) et/ou un dispositif de fixation (60) servant à fixer le coulisseau (50).

12. Appareil de raccordement (16) comportant une tête de raccordement (18) qui comporte un système de maintien (30) servant à maintenir un élément de raccordement (12), et un mécanisme d'entraînement de raccordement (34) au moyen duquel le système de maintien (30) peut être déplacé dans une direction de raccordement, **caractérisé en ce que** le système de maintien (30) est un système de maintien selon l'une des revendications 8 à 11.

13. Appareil de raccordement selon la revendication 12, **caractérisé en ce que** la tête de raccordement (18) comporte un pied de support (38) destiné à venir en appui contre une pièce (14) sur laquelle l'élément de raccordement (12) est destiné à être raccordé.
